(19) Europäisches Patentamt
European Patent Office
Office européen des brevets

(11) Veröffentlichungsnummer: **0 017 068**
**B1**

# (12) EUROPÄISCHE PATENTSCHRIFT

(45) Veröffentlichungstag der Patentschrift: **12.01.83**

(51) Int. Cl.³: **C 08 J 9/10,** C 08 L 21/00, C 09 K 3/00

(21) Anmeldenummer: **80101397.0**

(22) Anmeldetag: **17.03.80**

(54) **Mischungen aus Azodicarbonamid und Alpha-Amidosulfonen, deren Herstellung und Verwendung als Treibmittel.**

(30) Priorität: **28.03.79 DE 2912290**

(43) Veröffentlichungstag der Anmeldung: **15.10.80 Patentblatt 80/21**

(45) Bekanntmachung des Hinweises auf die Patenterteilung: **12.01.83 Patentblatt 83/2**

(84) Benannte Vertragsstaaten: **BE DE FR GB IT NL**

(56) Entgegenhaltungen:

**DE-A-1 569 535**
**DE-A-2 102 177**
**GB-A-1 264 132**

(73) Patentinhaber: **BAYER AG, Zentralbereich Patente, Marken und Lizenzen, D-5090 Leverkusen 1, Bayerwerk (DE)**

(72) Erfinder: **Jeblick, Werner, Dr., Walter-Flex-Strasse 30, D-5900 Leverkusen 1 (DE)**
Erfinder: **Roos, Ernst, Dr., Am Geusgarten 6, D-5068 Odenthal (DE)**
Erfinder: **Kempermann, Theo, Dr., Friedrich-Schmidt-Strasse 16a, D-5000 Köln 41 (DE)**
Erfinder: **Abele, Manfred, Am Boerschsgarten 16, D-5000 Köln 90 (DE)**

EP 0 017 068 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Mischungen aus Azodicarbonamid und α-Amidosulfonen, deren Herstellung und Verwendung als Treibmittel

Die Erfindung bezieht sich auf eine Mischung aus Azodicarbonamid mit α-Amidosulfonen, deren Herstellung durch Mischung der Komponenten miteinander sowie deren Verwendung als Treibmittel, insbesondere zur Herstellung von porösen Artikeln auf Basis von natürlichen und/oder synthetischen Kautschuken.

Die Auswahl eines geeigneten chemischen Treibmittels zur Herstellung von zelligen oder porösen Artikeln auf Basis von Kautschuk wird in erster Linie durch die Temperatur bestimmt, bei der sich das Treibmittel unter Gasabspaltung zersetzt. Azodicarbonamid hat eine Zersetzungstemperatur von 200-210°C; in Mischungen beginnt die Gasabspaltung bei etwa 160°C. In vielen Fällen wünscht man aber eine Zersetzung des Azodicarbonamids bei niedrigeren Temperaturen. Eine Zersetzung bei niedrigerer Temperatur würde eine Verringerung der thermischen Belastung der mit Azodicarbonamid zu verschäumenden Mischungen gestatten. Niedrigere Zersetzungstemperaturen würden weiterhin höhere Zersetzungsgeschwindigkeiten und kürzere Verarbeitungszyklen ermöglichen.

Es ist bereits bekanntgeworden, dass durch ein oder mehrere sogenannte Hilfstreibmittel, die eine niedrigere Zersetzungstemperatur besitzen als Azodicarbonamid, die Zersetzungstemperatur des Azodicarbonamids erniedrigt wird (DE-OS 1 569 535).

Die Verwendung dieser Hilfstreibmittel bringt es jedoch vielfach mit sich, dass bei der Herstellung und Verarbeitung der treibmittelhaltigen Mischungen eine vorzeitige Zersetzung des Treibmittels einsetzt, da die als Aktivatoren für Azodicarbonamid verwendeten Hilfstreibmittel, beispielsweise Benzolsulfohydrazid, sich schon bei relativ niedrigen Temperaturen, z. B. bei 80°C, zersetzen.

So kann es beim Lagern von Mischungen, die solche Treibmittelkombinationen enthalten, zu vorzeitiger, unerwünschter Zersetzung des Hilfstreibmittels kommen, was sich z. B. bei Kautschuk-Mischungen durch «Vortreiben» und bei Kunststoffen, z. B. PVC-Pasten, durch sogenanntes Gasen äussert.

Weiterhin ist es bekannt, die Zersetzungstemperatur von Azodicarbonamid mit sogenannten Aktivatoren zu erniedrigen, die selbst kein Treibmittel darstellen. Die Aktivatoren lassen sich in zwei unterschiedliche Klassen einteilen; in die Klasse der metallatomhaltigen Verbindungen und in die Klasse der metallatomfreien Verbindungen.

Metallatomhaltige Aktivatoren besitzen verschiedene Nachteile. So sind sie schlecht in Kautschuken verteilbar, verursachen Verfärbungen und sind zum Teil giftig.

Metallatomfreie Aktivatoren weisen diese Nachteile nicht auf. Aromatische Sulfinsäuren sowie deren Ammoniumsalze gemäss DE-OS 2 102 177 haben aber den Nachteil einer mangelnden Lagerstabilität.

Aufgabe der Erfindung ist es, eine Mischung auf Basis Azodicarbonamid bereitszustellen, die, als Treibmittel eingesetzt, frei von den oben beschriebenen Nachteilen ist.

Gegenstand der Erfindung ist somit eine Mischung aus Azodicarbonamid und einem α-Amidosulfon der Formel

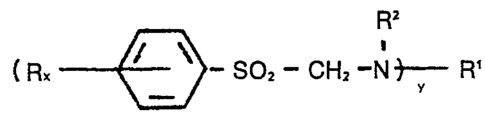

in der

R Wasserstoff, einen $C_1$-$C_4$-Alkylrest und/oder Halogen

x Zahlen von 0-5, bevorzugt 1

y Zahlen von 1-3, entsprechend der Wertigkeit von $R^1$

$R^1$ einen aromatischen Carbonsäure- oder Sulfonsäurerest mit sechs C-Atomen, der gegebenenfalls durch Halogen, $C_1$-$C_4$-Alkylreste, $C_1$-$C_4$-Alkoxyreste, Nitro und/oder Cyano ein- oder mehrfach, bevorzugt jedoch unsubstituiert ist, einen aliphatischen Carbonsäure- oder Sulfonsäurereste mit 1-4 Kohlenstoffatomen, einen Kohlensäurerest, Thiokohlensäurerest oder einen Phosphorsäurerest, der entsprechend dem Zahlenwert von y 0-2, gegebenenfalls mit $C_1$-$C_4$-Alkyl oder Halogen substituierte Phenoxy- oder $C_1$-$C_4$-Alkoxyreste enthält,

$R^2$ $R^1$, Wasserstoff, einen $C_1$-$C_4$-Alkylrest, einen $C_5$-$C_7$-Cycloalkylrest, einen Phenylrest, der gegebenenfalls ein- oder mehrfach, bevorzugt einfach durch $C_1$-$C_4$-Alkyl oder Halogen substituiert ist, einen Phenylalkylrest, dessen Phenylgruppe gegebenenfalls ein- oder mehrfach bevorzugt einfach durch $C_1$-$C_4$-Alkyl oder Halogen substituiert ist und dessen Alkylgruppe 1-3, bevorzugt 1 Kohlenstoffatom aufweist oder

$R^1$ und $R^2$ gemeinsam mit dem N-Atom einen cyclischen Lactamring ergeben, der 4-6 C-Atome aufweist,

darstellen.

Die Abmischung besteht bevorzugt aus 99,7-70 Gew.-%, bevorzugt 99,5-85 Gew.-%, Azodicarbonamid und 0,3-30 Gew.-%, bevorzugt 0,5-15 Gew.-%, α-Amidosulfon.

Ein weiterer Gegenstand der Erfindung ist ein Verfahren zur Herstellung der Mischung, das dadurch gekennzeichnet ist, dass man Azodicarbonamid und α-Amidosulfon im gewünschten Mengenverhältnis miteinander abmischt. Die Abmischtemperatur beträgt 10 bis 50°C. Die Mischung erfolgt in üblichen Apparaturen.

Ein weiterer Gegenstand der Erfindung ist die Verwendung der erfindungsgemässen Mischung als Treibmittel.

In der Formel bedeuten bevorzugt:

$C_1$-$C_4$ Alkylrest=Methyl-, Äthyl-, Propyl-, Butyl,
Halogen=Chlor, Brom, Jod

$C_1$-$C_4$ Alkoxyrest=Methoxy-, Äthoxy, Propoxy-, Butoxy-,
aromatischer Carbonsäurerest = Benzoesäurerest
aromatischer Sulfonsäurerest = Benzolsulfonsäurerest
aliphatischer Carbonsäurerest = Ameisen-, Essig-, Propionsäurerest
aliphatischer Sulfonsäurerest = Methan-, Ethan-, Propansulfonsäurerest
Phosphorsäurerest = Phosphorsäureesterrest mit 0-2 Estergruppen mit $C_1$-$C_2$-Alkylgruppen oder Phenylgruppen
Kohlensäurerest = zusammen mit dem benachbarten Stickstoff Harnstoff, Carbaminsäureester wie Methyl- oder Ethylester
Thiokohlensäurerest = zusammen mit dem benachbarten Stickstoff Thioharnstoff
$C_5$-$C_7$-Cycloalkylrest = Cyclopentyl-, Cyclohexyl,-Cycloheptylrest
Phenylalkylrest = Benzyl-, Phenyläthyl-, Phenylpropylrest
Lactamring mit 4 bis 6 C-Atomen = Pyrrolidinon, Piperidinon, ε-Caprolactam

Als Beispiel für geeignete Verbindungen seien genannt:
N,N'-Dibenzolsulfonylmethyl-harnstoff
N,N'-Dibenzolsulfonylmethyl-thioharnstoff
N-Benzolsulfonylmethyl-harnstoff
N,N-Dimethyl-N'-benzolsulfonylmethyl-harnstoff
N-Tosylmethyl-acetamid
N-Benzolsulfonylmethyl-benzamid
N-Tosylmethyl-benzamid
N-Methyl-N-tosylmethyl-benzamid
N-Benzolsulfonylmethyl-benzolsulfonamid
N-Tosylmethyl-benzolsulfonamid
N-Methyl-N-benzolsulfonyl-benzolsulfonamid
N,N'-Dibenzolsulfonylmethyl-benzoldisulfonamid--1,3
N-Tosylmethyl-ε-caprolactam
N-Benzolsulfonylmethyl-ε-caprolactam
N-Benzolsulfonylmethyl-carbaminsäureethylester
N,N',N''-Tribenzolsulfonylmethyl-phosphorsäuretrianilid

Die α-Amidosulfone sind bekannt und beispieslsweise in J. Strating et. al. Rec. Trav. Chim. 92 (1973) 72-82 beschrieben. Die Herstellung erfolgt analog folgendem Formelschema:

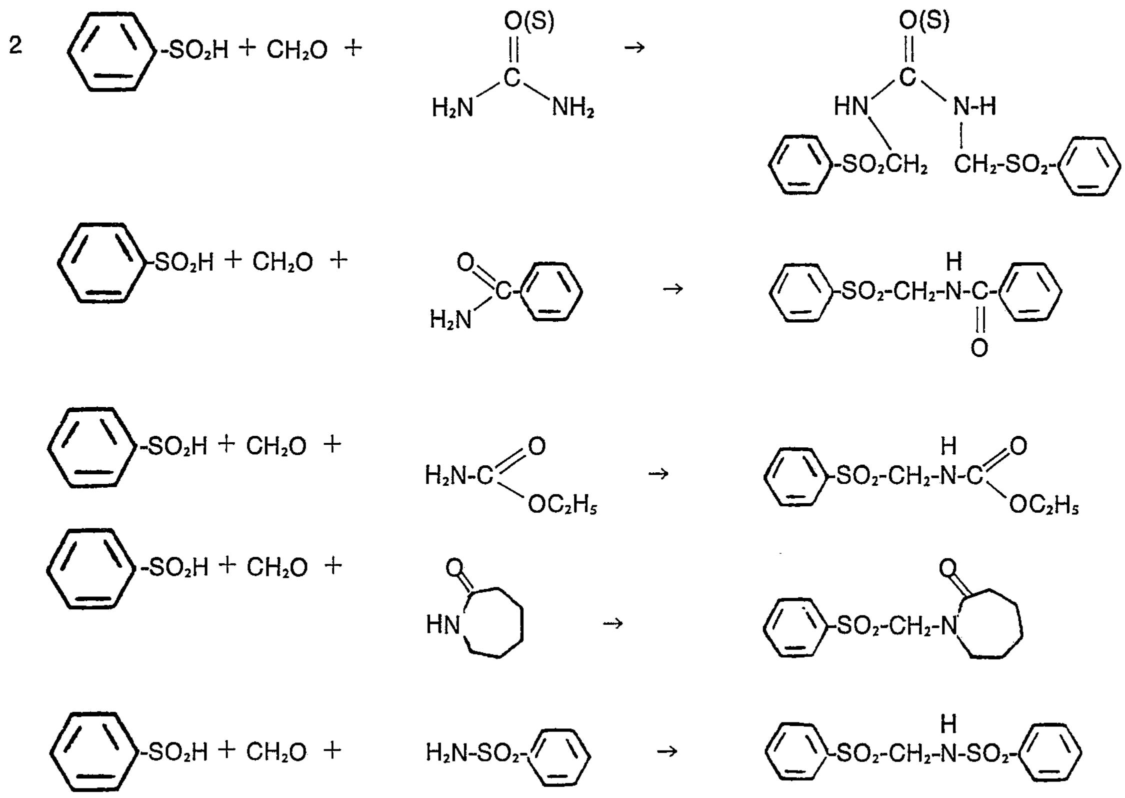

Die erfindungsgemässe Mischung kann als Treibmittel in dem Fachmann geläufigen Mengen dem aufzuschäumenden Substrat zugegeben werden. Bevorzugt werden bezogen auf 100 Gew.-Teile Polymer 1 bis 25 Gew.-Teile, insbesondere 3 bis 15 Gew.-Teile zugegeben.

Geeignete Kautschuke für die Herstellung von zelligen bzw. porösen Artikeln unter Verwendung von Azodicarbonamid und Aktivatoren auf Basis von α-Amidosulfonen sind z. B. Naturkautschuk oder synthetische, kautschukähnliche Polymere, die z. B. aus konjugierten Diolefinen, wie Butadien, Chlorbutadien, Dimethylbutadien, Isopren und seinen Homologen, erhalten werden; oder Mischpolymerisate derartig konjugierter Diolefine mit polymerisierbaren Vinylverbindungen, wie Styrol, α-Methylstyrol, Acrylnitril, Methacrylnitril, weiterhin Polymerisate wie Ethylen-propylen-terpolymere, mit Dienen als Terkomponente, Ethylen-propylen-copolymere, sowie Mischungen der genannten Polymere.

Die als Zersetzungsaktivatoren für Azodicarbonamid fungierenden α-Amidosulfone können in die zu verschäumenden Mischungen auf übliche Weise eingemischt werden, beispielsweise auf Mischwalzwerken, Innenmischern oder in mit Rührwerken ausgestatteten Mischbehältern; sie können gleichzeitig mit der Zugabe anderer Mischungsbestandteile zugesetzt werden. Vorzugsweise werden die Aktivatoren jedoch dem als Treibmittel verwendeten Azodicarbonamid von vornherein zugesetzt.

Die Kautschukmischungen können auch andere bekannte Hilfstoffe enthalten, z. B. aktive oder inaktive Füllstoffe, wie Russ oder Kreide, Antioxidantien, Antiozonaten, Wachse, Farbstoffe, Pigmente, Zinkoxid, Fettsäuren wie z. B. Stearinsäure, Mineralöle, Weichmacher, Gleitmittel, Peroxide, Vulkanisiermittel wie Schwefel und Beschleuniger. Als Beschleuniger seien beispielsweise genannt: Thiazole, Guanidine, Dithiocarbamate, Thiurame, 2-Mercaptoimidazolin.

Nach Zugabe der erfindungsgemässen Mischung sowie gegebenenfalls der weiteren Hilfsstoffe wird der Kautschuk auf eine Temperatur von 100 bis 250°C, vorzugsweise von 140 bis 180°C erhitzt. Dabei tritt der Verschäumungsvorgang ein.

Die geschäumten Kautschuke eignen sich zur Herstellung von formgeheizten und kontinuierlich geheizten Moosgummiprofilen (UHF- und LCM-Verfahren),

Moosgummiplatten für Dichtungs- und Isolierzwecke,

Materialien für Rohrisolation,

expandierten Zellgummiplatten zur Herstellung von Schuhsohlen und Formsohlen.

Die Wirkung der Aktivatoren wird durch das folgende Beispiel veranschaulicht, wobei die in Tabelle 1 angegebenen Zahlenwerte Gewichtsteile bedeuten.

TABELLE 1

| Mischung Nr.: | 1 | 2 | 3 | 4 | 5 | 6 |
|---|---|---|---|---|---|---|
| Ethylen-Propylen-Dien-Terpolymer | 100,0 | 100,0 | 100,0 | 100,0 | 100,0 | 100,0 |
| Zinkoxid | 5,0 | 5,0 | 5,0 | 5,0 | 5,0 | 5,0 |
| Stearinsäure | 1,0 | 1,0 | 1,0 | 1,0 | 1,0 | 1,0 |
| Ofenruss (N 990) | 40,0 | 40,0 | 40,0 | 40,0 | 40,0 | 40,0 |
| Gemahlene Kreide | 75,0 | 75,0 | 75,0 | 75,0 | 75,0 | 75,0 |
| Naphthenisches Mineralöl | 75,0 | 75,0 | 75,0 | 75,0 | 75,0 | 75,0 |
| 2-Mercaptobenzothiazol | 0,5 | 0,5 | 0,5 | 0,5 | 0,5 | 0,5 |
| Tetramethylthiuram-monosulfid | 1,5 | 1,5 | 1,5 | 1,5 | 1,5 | 1,5 |
| N,N'-Diphenylthioharnstoff | 1,0 | 1,0 | 1,0 | 1,0 | 1,0 | 1,0 |
| Schwefel | 1,5 | 1,5 | 1,5 | 1,5 | 1,5 | 1,5 |
| Azodicarbonamid | 3,0 | 3,0 | 3,0 | 3,0 | 3,0 | 3,0 |
| N-Benzolsulfonylmethyl-benzolsulfonamid | — | 0,3 | — | — | — | — |
| N,N'-Dibenzolsulfonylmethyl-harnstoff | — | — | 0,3 | — | — | — |
| N-Benzolsulfonylmethyl-benzamid | — | — | — | 0,3 | — | — |
| N-Benzolsulfonylmethyl-ε-caprolactam | — | — | — | — | 0,3 | — |
| N,N'-Dibenzolsulfonylmethyl-thioharnstoff | — | — | — | — | — | 0,3 |

Die auf einem Mischwalzwerk hergestellten Mischungen wurden mittels eines Extruders zu Profilen mit jeweils gleichem Querschnitt gespritzt. Anschliessend wurden diese Profile in eine geeignete Vulkanisierform eingelegt. Die unvulkanisierten Profile wurden vor dem Einlegen auf gleiche Länge geschnitten und füllten die Formen nur zu einem Teil aus, und zwar in der Weise, dass nur bei vollständiger Gasabspaltung des Azodicarbonamids die Formen während bzw. nach der Vulkanisation ausgefüllt werden konnten. Die Vulkanisation wurde in

einer Presse bei 160°C innerhalb 20 Minuten durchgeführt.

Die vulkanisierten und getriebenen Moosgummi-Profile wiesen die nachfolgend aufgeführten Dichten ($g/cm^3$) auf:

| Mischung Nr.: | 1 | 2 | 3 | 4 | 5 | 6 |
|---|---|---|---|---|---|---|
| Dichte ($g/cm^3$) | 0,73 | 0,44 | 0,42 | 0,47 | 0,49 | 0,44 |

Anhand dieser Tabelle wird ersichtlich, dass Azodicarbonamid ohne Aktivator bei 160°C eine zu geringe Gasmenge abspaltet und folglich die Mischung nur unzureichend auftreibt. Man erhält in diesem Fall ein Profil mit relativ hoher Dichte (Mischung Nr. 1). Alle anderen Mischungen (Nr. 2-6), die ausser Azodicarbonamid noch Aktivatoren enthalten, füllten die vorgegebenen Formen vollständig aus, was in den niedrigen Dichten zum Ausdruck kommt.

**Patentansprüche**

1. Mischung aus Azodicarbonamid und einem α-Amidosulfon der Formel

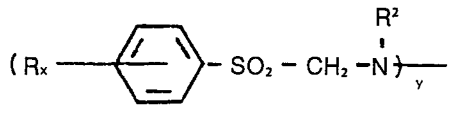

in der

R Wasserstoff, einen $C_1$-$C_4$-Alkylrest und/oder Halogen

x Zahlen von 0-5,

y Zahlen von 1-3, entsprechend der Wertigkeit von $R^1$

$R^1$ einen aromatischen Carbonsäure- oder Sulfonsäurerest mit sechs C-Atomen, der gegebenenfalls durch Halogen, $C_1$-$C_4$-Alkylreste, $C_1$-$C_4$-Alkoxyreste, Nitro und/oder Cyano ein- oder mehrfach, substituiert ist, einen aliphatischen Carbonsäure- oder Sulfonsäurereste mit 1-4 Kohlnstoffatomen, einen Kohlensäurerest, Thiokohlensäurerest oder einen Phosphorsäurerest, der entsprechend dem Zahlenwert von y 0-2, gegebenenfalls mit $C_1$-$C_4$-Alkyl oder Halogen substituierte Phenoxy- oder $C_1$-$C_4$-Alkoxyreste enthält.

$R^2$ $R^1$, Wasserstoff, einen $C_1$-$C_4$-Alkylrest, einen $C_5$-$C_7$-Cycloalkylrest, einen Phenylrest, der gegebenenfalls ein- oder mehrfach, durch $C_1$-$C_4$-Alkyl oder Halogen substituiert ist, einen Phenylalkylrest, dessen Phenylgruppe gegebenenfalls ein- oder mehrfach durch $C_1$-$C_4$-Alkyl oder Halogen substituiert ist und dessen Alkylgruppe 1-3 Kohlenstoffatome aufweist oder

$R^1$ und $R^2$ gemeinsam mit dem N-Atom einen cyclischen Lactamring ergeben, der 4-6 C-Atome aufweist,

darstellen.

2. Mischung gemäss Anspruch 1, bestehend aus 99,7-70 Gew.-% Azodicarbonamid und 0,3-30 Gew.-% α-Amidosulfon.

3. Mischung gemäss Anspruch 1, bestehend aus 99,5-85 Gew.-% Azodicarbonamid und 0,5-15 Gew.-% α-Amidosulfon.

4. Verfahren zur Herstellung der Mischung gemäss Ansprüchen 1-3, dadurch gekennzeichnet, dass man Azodicarbonamid und α-Amidosulfon im gewünschten Mengenverhältnis miteinander bei Temperaturen von 10-50°C abmischt.

5. Verfahren zur Herstellung von geschäumten Gegenständen aus Natur- und/oder Synthesekautschuk durch Zusatz eines Treibmittels, dadurch gekennzeichnet, dass als Treibmittel eine Mischung gemäss Ansprüchen 1-3 dem Kautschuk zugegeben und anschliessend dieser auf Temperaturen von 100 bis 250°C erhitzt wird.

6. Verfahren gemäss Anspruch 7, dadurch gekennzeichnet, dass man, bezogen auf 100 Gew.-Teile Kautschuk, 1 bis 25 Gew.-Teile der Mischung gemäss Ansprüchen 1-3 zugibt.

**Claims**

1. A mixture of azodicarbonamide and an α-amidosulphone of the formula

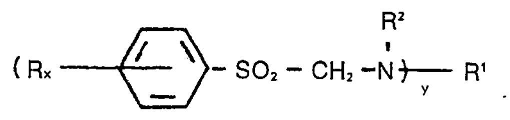

in which

R represents hydrogen, a $C_1$-$C_4$-alkyl residue and/or halogen,

x represents numbers from 0 to 5,

y represents numbers from 1 to 3, corresponding to the valency of $R_1$,

$R^1$ represents an aromatic carboxylic acid residue or sulphonic acid residue with 6 carbon atoms, which is optionally substituted once or several times by halogen, $C_1$-$C_4$ alkyl residues, $C_1$-$C_4$ alkoxy residues, nitro and/or cyano, or represents an aliphatic carboxylic acid residue or a sulphonic acid residue with 1-4 carbon atoms, a carbonic acid residue, a thiocarbonic acid residue or a phosphoric acid residue which, corresponding to the numerical value of y, contains 0-2 phenoxy residues or $C_1$-$C_4$ alkoxy residues optionally substituted with $C_1$-$C_4$ alkyl or halogen,

$R^2$ represents $R^1$, or hydrogen, a $C_1$-$C_4$ alkyl residue, a $C_5$-$C_7$ cycloalkyl residue, a phenyl residue, which is optionally substituted once or several times by $C_1$-$C_4$-alkyl or halogen, a phenyl alkyl residue whose phenyl group is optionally substituted once or several times by $C_1$-$C_4$-alkyl or halogen and whose alkyl group has 1-3 carbon atoms or

$R_1$ and $R_2$ together with the nitrogen atom form a cyclic lactam ring which has 4-6 carbon atoms.

2. A mixture according to claim 1, consisting of 99.7-70% by weight of azodicarbonamide and 0.3-30% by weight of the α-amidosulphone.

3. A mixture according to claim 1, consisting of 99.5-85% by weight of azodicarbonamide and 0.5-15% by weight of the α-amidosulphone.

4. A process for the production of the mixture according to claims 1 to 3, characterised in that the azodicarbonamide and α-amidosulphone are mixed together in the required quantitative ratio at temperatures of 10-50°C.

5. A process for the production of foamed articles of natural and/or synthetic rubber by addition of a blowing agent, characterised in that a mixture according to claims 1 to 3 is added to the rubber as a blowing agent and thereafter this is heated to temperatures of from 100 to 250°C.

6. A process according to claim 7, characterised in that from 1 to 25 parts by weight of the mixture according to claims 1 to 3 are added, based on 100 parts by weight of the rubber.

**Revendications**

1. Mélange d'azodicarbonamide et d'une α-amidosulfone de formule:

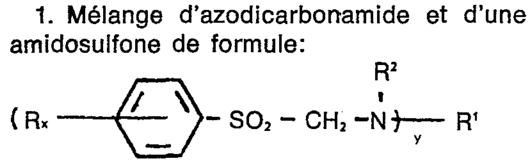

dans laquelle

R représente de l'hydrogène, un radical alcoyle en $C_1$-$C_4$ et/ou de l'halogène

x représente les nombres 0 à 5,

y représente les nombres 1 à 3, selon la valence de $R^1$

$R^1$ représente un radical d'acide carboxylique ou d'acide sulfonique aromatique ayant six atomes de carbone, qui est substitué une ou plusieurs fois éventuellement par de l'halogène, des radicaux alcoyle en $C_1$-$C_4$, des radicaux alcoxy en $C_1$-$C_4$, nitro et/ou cyano, un radical d'acide carboxylique ou d'acide sulfonique aliphatique ayant 1 à 4 atomes de carbone, un radical d'acide carbonique, un radical d'acide thiocarbonique ou un radical d'acide phosphorique qui, selon la valeur numérique de y, contient 0 à 2 radicaux phénoxy éventuellement substitués par un alcoyle en $C_1$-$C_4$ ou de l'halogène, ou des radicaux alcoxy en $C_1$-$C_4$,

$R^2$ représente $R^1$, de hydrogène, un radical alcoyle en $C_1$-$C_4$, un radical cycloalcoyle en $C_5$-$C_7$, un radical phényle qui est éventuellement substitué une ou plusieurs fois par un alcoyle en $C_1$-$C_4$ ou de l'halogène, un radical phénylalcoyle dont le groupe phényle est éventuellement substitué une ou plusieurs fois par un alcoyle en $C_1$-$C_4$ ou de l'halogène et dont le groupe alcoyle présente 1 à 3 atomes de carbone ou

$R^1$ et $R^2$ fournissent ensemble avec l'atome N un noyau factame cyclique qui présente 4 à 6 atomes de carbone.

2. Mélange selon la revendication 1, consistant en 99,7-70% en poids d'azodicarbonamide et en 0,3-30% en poids d'α-amidosulfone.

3. Mélange selon la revendication 1, consistant en 99,5-85% en poids d'azodicarbonamide et en 0,5-15% en poids d'α-amidosulfone.

4. Procédé de préparation du mélange selon les revendications 1 à 3, caractérisé en ce qu'on mélange ensemble de l'azodicarbonamide et de l'α-amidosulfone dans le rapport quantitatif désiré à des températures de 10 à 50°C.

5. Procédé de préparation d'articles en mousse à partir de caoutchouc naturel et/ou synthétique par addition d'un agent expanseur, caractérisé en ce qu'on ajoute comme agent expanseur un mélange selon les revendications 1 à 3 au caoutchouc et en ce qu'on chauffe ensuite celui-ci à des températures de 100 à 250°C.

6. Procédé selon la revendication 7, caractérisé en ce que, pour 100 parties en poids de caoutchouc, on ajoute 1 à 25 parties en poids du mélange selon les revendications 1 à 3.